# EUROPEAN PATENT SPECIFICATION

(11) **EP 2 886 377 B1**
(45) Date of publication and mention of the grant of the patent: **10.01.2018**
(21) Application number: 14199319.6
(22) Date of filing: 19.12.2014
(51) Int. Cl.: B60G 99/00, B62D 33/067, B60G 17/017, B60G 21/055, B62D 33/06

(54) **Cabin leveling device, and a truck or tractor fitted with the cabin leveling device**
Kabinennivellierungsvorrichtung und Lastkraftwagen oder Traktor mit der Kabinennivellierungsvorrichtung
Dispositif de nivellement de cabine et camion ou tracteur équipé du dispositif de nivellement de cabine

(30) Priority: 20.12.2013 NL 2012013
(43) Date of publication of application: 24.06.2015
(73) Proprietor: Daf Trucks N.V., 5643 TW Eindhoven (NL)
(72) Inventor: Vreede, Robert Jacobus, 5643 TW Eindhoven (NL)
(74) Representative: V.O.

(56) References cited:
- EP-A2- 1 584 545
- DE-A1-102005 005 724
- US-A1- 2009 302 555

## Description

The invention relates to a cabin leveling device for a truck or tractor cabin with sleeping accommodation, and a truck or tractor fitted with this cabin leveling device.

It is known for load hauling trucks or tractors to be equipped with cabins that offer sleeping accommodation and other lodging amenities. In view of driver welfare the comfort offered by these amenities is of great importance. It is therefor annoying when a level earth surface for parking cannot be found when strictly imposed rules require a truck or tractor driver to take a rest. To eliminate such annoyances it has been proposed to level a bed surface with respect to a horizontal reference level. While this has partly solved the problem when the driver is sleeping during a rest period, the present day truck and tractor cabins also may have amenities, such as kitchen and/or sanitary facilities, which cannot be leveled. Also occupation of the cabin for activities other than driving may be awkward, or even dangerous, when a floor surface of the cabin is not level.

It is also known from EP 1 584 545 (A2) to level a truck cabin with sleeping accommodation to compensate for an unlevel surface on which the truck is parked. Another cabin level correction for a stationary truck is described in DE 10 2005 005 724 (A1). In both instances the cabin leveling option is an additional feature of a comprehensive dynamically controlled cabin suspension system.

Accordingly it is an object of the present invention to propose an improved device for leveling that does not require presence of a comprehensive dynamically controlled cabin suspension system. In a more general sense it is thus an object of the invention to overcome or reduce at least one of the disadvantages of the prior art. It is also an object of the present invention to provide solutions which are less cumbersome in assembly and operation and which moreover can be made relatively inexpensively, by making a more optimal use of already present components. Alternatively it is an object of the invention to at least provide a useful alternative.

To this end the invention provides for a cabin leveling device for a truck or tractor cabin with sleeping accommodation, and a truck or tractor fitted with this cabin leveling device as defined in the appended claims.

Accordingly a cabin leveling device is provided for a truck or tractor cabin with sleeping accommodation, which includes an actuator adapted to be operatively associated with suspension means between at least one front wheel of a truck or tractor supported on an earth surface and the cabin of the truck or tractor, and a control device arranged for selectively operating the actuator to alter an angular position of the cabin with respect to a horizontal reference level, only by increasing or diminishing a distance between the cabin and the at least one front wheel when the truck or tractor is parked. In this cabin leveling device the actuator is a hydraulic actuator, and the control device is a modified cabin tilt pump comprising a 4-position hydraulic valve. Such a leveling device not only levels a bed surface, but also the entire cabin with respect to the horizontal reference level. The cabin floor and all other amenities are thereby brought in a horizontal position, which increases their usefulness and ensures safety for an occupant of the cabin not sleeping or driving when the truck or tractor vehicle is parked on an unlevel surface. This particular construction also benefits from the common presence on a truck or tractor of a cabin tilt pump, which enables access to the engine for maintenance and repair. Modifying this cabin tilt pump by including a 4-position valve requires minimal investment and provides for a more optimal use of this pump unit. In this regard it may only be required to further include a pair of additional hydraulic lines to connect the modified cabin tilt pump with the actuator.

In an embodiment the cabin leveling device the actuator can be a linear actuator for selective extension and retraction. Operation of the linear actuator can then be effective to increase or diminish a distance between the cabin and the at least one front wheel. Thereby a simple, economic and attractive first equipment or after-market truck or tractor enhancement may be offered. In this regard it is also advantageous that the actuator is a hydraulic actuator.

The actuator may then preferably also be arranged to be interposed between an axle carrying the at least one front wheel and a chassis frame of a truck or tractor. Advantageously the actuator is then arranged to be pivotally connected to a stabilizer rod associated with the axle. Similarly the actuator is then preferably also arranged to be pivotally connected to a longitudinal frame side member of a truck or tractor, and more in particular is arranged to function as a stabilizer shackle when the truck or tractor is being driven. In this regard extension or retraction of the actuator may only be enabled when the truck or tractor is not being driven.

A further embodiment includes a truck or tractor with a cabin with sleeping accommodation that is provided with the cabin leveling device of the invention.

Further advantageous aspects of the invention will become clear from the appended description and in reference to the accompanying drawings, in which:
Figure 1 is a front view of a truck standing on a slanted surface;
Figure 2 is a front view of the truck of Figure 1, but now with its cabin leveled to compensate for the slanted surface;
Figure 3 is a schematic overview of a front part of a truck with cabin and ancillaries often found in association therewith;
Figure 4 is an isometric view of the front part of a truck;
Figure 5 is a schematic circuit diagram illustrating a convenient operating system in association with the present invention; and
Figure 6 illustrates on an enlarged scale a detail of Figure 5 indicated by VI.

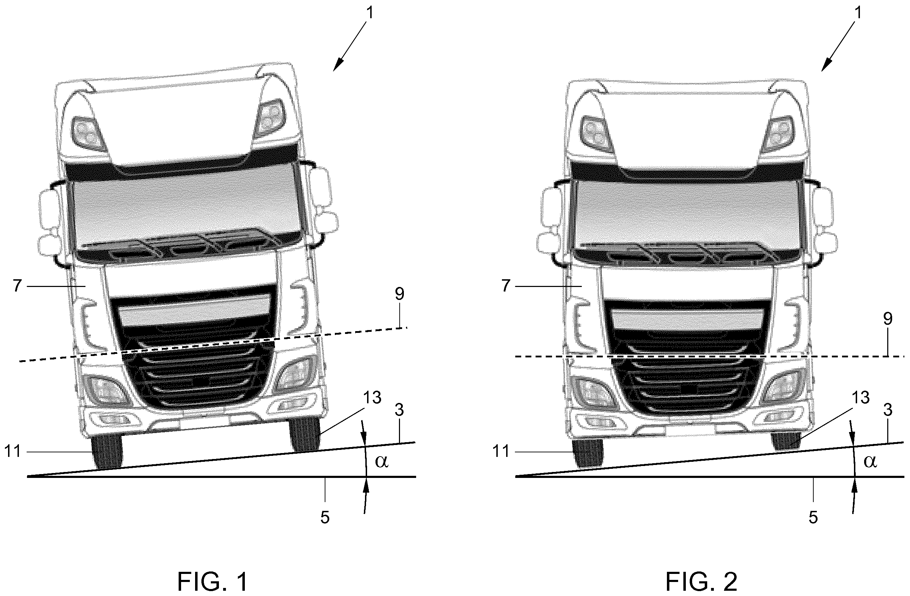

In Figure 1 a front elevation of a truck 1 is shown being parked on a slanted or unlevel earth surface 3, which is angled by an angle α with respect to a horizontal reference level, indicated by line 5. A floor surface of a cabin 7, indicated by dotted line 9 extends in parallel to the slanted surface 3, or at least with the contact points of the RH and LH front wheels 11, 13 when surface 3 is an unlevel surface rather than a slanted surface. The situation depicted in Figure 1 can occur when a truck driver has to take a rest and use the sleeping facilities provided in the truck cabin 7. To improve the comfort of the truck driver under such conditions, it would be desirable to adjust the cabin level as illustrated in Figure 2. In Figure 2 it is shown that the floor surface 9 of the cabin 7 extends parallel to the horizontal level 5. As seen in Figure 2 this leveling may have been achieved by either raising the cabin 7 with respect to the RH front wheel 11, by lowering the cabin 7 with respect to the LH front wheel 13, or both.

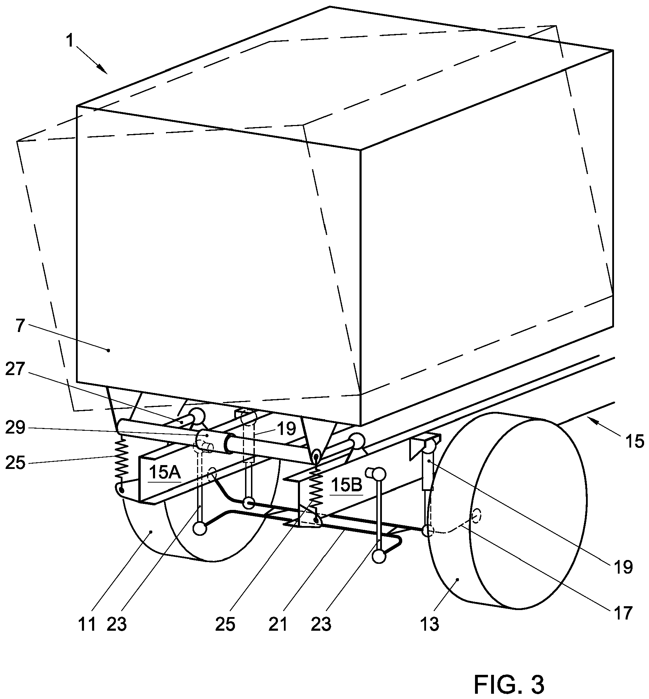

Figure 3 illustrates schematically a typical arrangement of a cabin 7 on a forward end of a truck chassis frame 15. The RH and LH front wheels 11, 13 are carried on a front axle beam 17, which supports the chassis by means of springs (deleted for clarity, but conventional). The springs are each associated with a shock absorber 19, which dampens the spring supported movements of the chassis frame 15 during road travel. As front axle stabilizer rod 21, associated with the front axle beam 17, is connected by stabilizer shackles 23 to longitudinal opposite RH and LH frame side members 15A, 15B of the chassis frame 15. The front axle stabilizer rod 21 reduces lateral tilting of the upper structure of the truck 1 during road use. The cabin 7 in turn is suspended with respect to the chassis 15 by means of springs 25, in this example represented as coil springs, but air springs are also possible. Lateral tilting of the cabin 7 during road use is controlled by a cabin stabilizer 27.

During standstill, and in particular when the truck 1 is in a parked position, the above described dynamic suspension systems are not in use. When it becomes necessary to adjust the level of the cabin 7 with respect to a slanted or uneven support surface of the RH and LH front wheels 11, 13generally the earth surface -- there are a number of options according to the invention to alter an angular position of the cabin 7 with respect to a horizontal reference level.

In a first embodiment of the invention it would be possible to divide the cabin stabilizer 27 into individual RH and LH halves joined by an angular actuator 29 in the middle. By using the angular actuator 29 to twist the RH and LH halves of the cabin stabilizer 27 it becomes possible to tilt the cabin 7 to one or the other side, as indicated by the dotted lines in Figure 3. This then will adjust the level of the cabin 7 with respect to the chassis frame 15, and hence with respect to the surface supporting the RH and LH front wheels 11, 13.

Alternatively according to a second and third embodiment of the invention it is also possible to tilt the chassis frame 15, together with the cabin 7, in respect of the RH and LH front wheel 11, 13.

In a second embodiment at least one, or both, of the shock absorbers 19 is/are executed as a hydraulic actuator. Suitable means can then be provided to switch from a shock absorber function for driving to a hydraulic actuator function when the truck vehicle is at rest. Clearly safety measures may be provided to ensure that driving is inhibited when the shock absorber 19 is in its actuator function. When both shock absorbers 19 would be arranged to act as a hydraulic actuator, tilting of the cabin 7 and chassis frame 15 in relation to the axle beam 17 can be accomplished by simultaneously extending one shock absorber 19 while retracting the other. Rather than integrating the actuator function into the shock absorber 19, it is also possible to position a supplementary linear actuator in parallel to the relevant shock absorber 19, or elsewhere between the chassis frame 15 and axle beam 17. However, the hydraulic system required to simultaneously operate two actuators is inevitably somewhat more complicated than when only one of the shock absorbers 19 is arranged to operate as an actuator. In most situations that will be encountered in cabin levelling a single shock absorber 19, or a supplementary actuator, on only one side of the vehicle will provide a sufficient range of adjustment. This will also safe cost and reduce the chances of malfunction.

In a third embodiment it is proposed to replace one or both of the stabilizer shackles 23 by a linear hydraulic actuator. This enables one of the shackles 23 connecting the stabilizer rod 21 with the chassis 15 to be extended or retracted, with again the effect that the chassis 15 and cabin 7 are tilted with respect to the front axle beam 17.

In an alternative arrangement of the third embodiment an angular actuator, similar to the angular actuator 29 of the first embodiment, could be incorporated in a portion of the stabilizer rod 21 that coextends with the front axle beam 17. By thus twisting independent parts of the stabilizer rod 21 the same effect of tilting the chassis 15 and cabin 7 with respect to the front axle beam 17 can also be achieved. Such an angular actuator will likely be subjected to higher forces, but in this position also benefits from an increased availability of space.

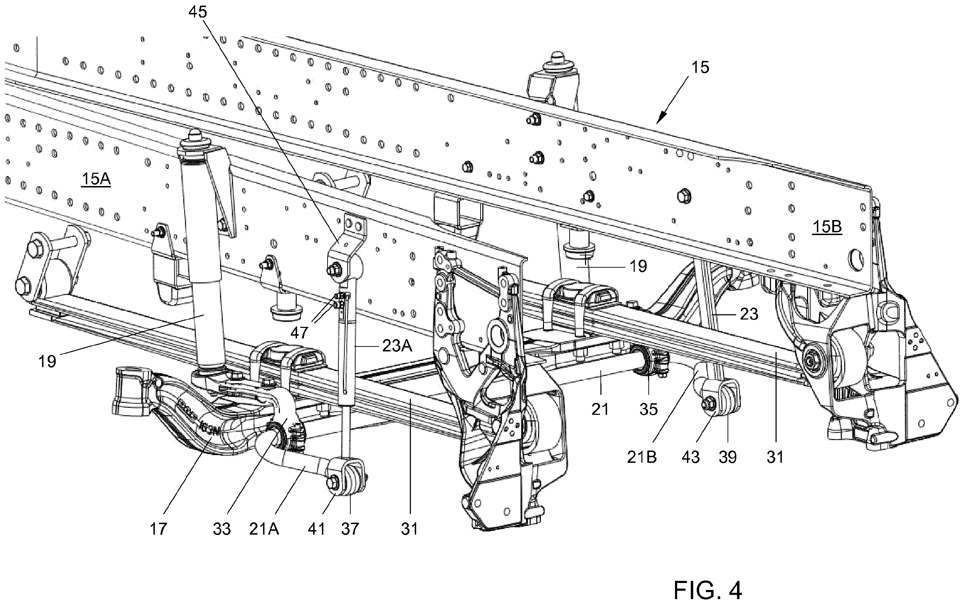

Figure 4 in detail shows particulars of the third embodiment. As seen in Figure 4 the chassis frame 15, comprising the opposite longitudinal frame side members 15A, 15B is supported on the front axle beam 17 by means of road springs 31. While the road springs 31 in this example are embodied as leaf springs, these can also be air spring bellows, or combinations of leaf springs and air bellows. Such alternatives are well known to a skilled person. Shock absorbers 19 are arranged between the axle beam 17 and the respective RH and LH frame side members 15A, 15B, for dampening the movements of the chassis 15 in relation to the front axle beam 17 and road springs 31. The stabilizer rod 21 has a portion that coextends with the front axle beam 17 and perpendicular arms 21A, 21B on opposite ends that extend in a direction substantially parallel to the frame side members 15A, 15B. The portion of the stabilizer rod 21 that coextends with the front axle beam 17 is journalled at opposite ends in bearing blocks 33, 35 associated with opposite ends of the front axle beam 17. Free ends of the perpendicular arms 21A, 21B are formed as eyelets 37, 39 to pivotally receive a yoke 41 of an actuator 23A at the RH frame side member 15A and a yoke 43 of a stabilizer shackle 23 at the LH frame member 15B. The eyelets 37, 39 can each be provided with a resilient bushing, as is conventional, while an upper end of each of the stabilizer shackle and actuator 23A is pivotally connected to a respective frame side member 15A, 15B by means of a bracket 45. The actuator 23A is conveniently a linear hydraulic actuator having hydraulic connections 47. Such a hydraulic actuator may be of a type as described in patent document US 4712471. However, in a simplified version of the invention the actuator 23A may also be a linear mechanical screw threaded adjuster.

When in the embodiment of Figure 4 a hydraulic actuator 23A is employed, the operation thereof may conveniently be combined with a hydraulic operating device of a forwardly tilting cab. Such forward-tilting cabs are common on present day trucks to allow access to the engine, and an example is described in patent document US 3800537 .

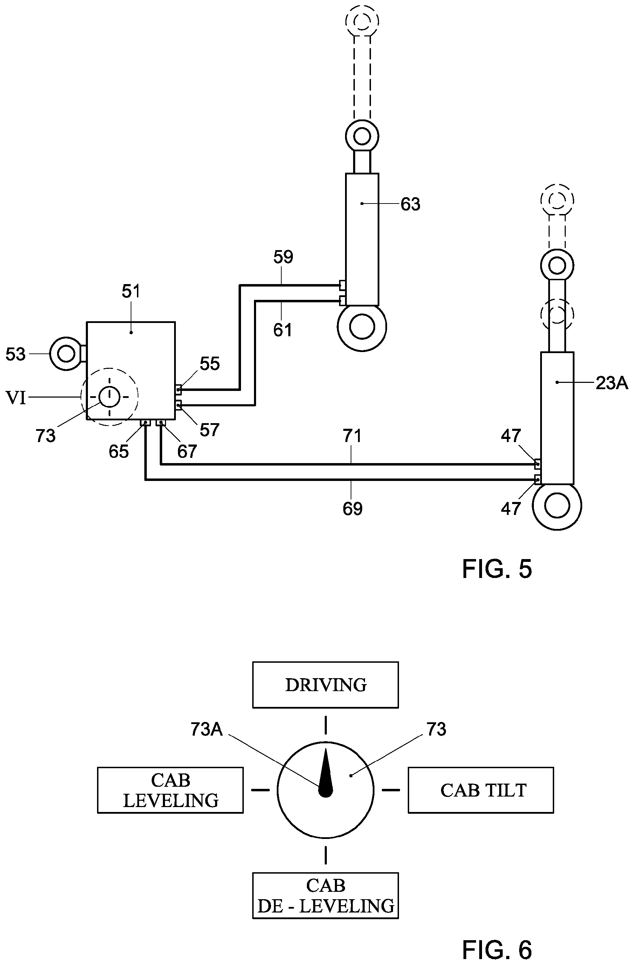

A modified cab-tilt operation device for use with the embodiment of Figure 4 is shown schematically in Figure 5. A hand pump device 51 is conventionally provided with an operating handle 53. This operating handle 53 is often provided with an opening for receiving a removable bar (not shown, but conventional) for manually operating a plunger pump within the hand pump device 51. The hand pump device 51 is conventionally provided with hydraulic connections 55, 57 and through hydraulic lines 59, 61 operates a cab tilt actuator 63 between an extended position (shown in dotted lines) and a retracted position. The modification of the hand pump device 51 comprises a 4-position hydraulic valve, which enables the hydraulic pump 51 to be selectively connected with additional hydraulic connections 65, 67 and a pair of additional hydraulic lines 69,71. By means of the additional hydraulic lines 69, 71 the hydraulic actuator 23A may selectively be operated for tilting the chassis frame 15 and cab 7 with respect to the front axle beam 17 (see Figure 4).

To operate the 4-position hydraulic valve of the pump device 51 a rotating knob 73 may be provided, such as shown on an enlarged scale in Figure 6. As shown in Figure 6 the operating positions of the 4-position valve may be labelled in accordance with a position of a pointer 73A on the knob 73. From the "DRIVING" position, which serves as a default, and in a parked position of the truck the operating person may either select "CAB TILT" for engine maintenance, or select 'CAB LEVELING" for bringing the cab 7 (Figs. 1-3) into a level position by extension of the actuator 23A. The operating person may also select the 'CAB DELEVELING" position for bringing the cab 7 into a level position by retraction of the actuator 23A. Prior to driving the position "DRIVING" needs to be selected. Precautionary the "DRIVING" position of the 4-position valve may be associated with means inhibiting driving of the truck when the "DRIVING"-position has not been selected.

While the cab tilt pump device 51 has been described as a hand pump, it is within the scope of the invention that this can also be an electrically operated pump, such as described in patent document US 2306348. Also the 4-position valve can have a remote control, so that it may in combination with an electric cab tilt pump be operated from within the cabin for additional convenience.

Conveniently a level measuring tool may also be associated with the cabin floor surface 9 for visualizing variations of the cabin level with respect to a horizontal reference level. When the levelling operation is electrically operated, the level measuring tool can also be replaced by an electronic level control unit for automatically controlling the electrically operated pump.

Accordingly a cabin leveling device is described, which is arranged for a truck or tractor cabin 7 with sleeping accommodation, and also a truck or tractor 1 fitted with the cabin leveling device. The cabin leveling device includes an actuator 23A; 29 adapted to be operatively associated with suspension means 19, 21, 25, 27, 31 between at least one front wheel 11; 13 of a truck or tractor 1 supported on an earth surface 3 and the cabin of the truck or tractor. Also included in the cabin leveling device is a control device for selectively operating the actuator to alter an angular position of the cabin 7 with respect to a horizontal reference level 5. The angular position of the cabin 7 is altered only by increasing or diminishing a distance between the cabin 7 and the at least one front wheel 11; 13, when the truck or tractor 1 is parked.

It is thus believed that the operation and construction of the present invention will be apparent from the foregoing description and drawings appended thereto. It will be clear to the skilled person that the invention is not limited to any embodiment herein described and that modifications are possible which should be considered within the scope of the appended claims. Also kinematic inversions are considered inherently disclosed and to be within the scope of the invention. In the claims, any reference signs shall not be construed as limiting the claim. The term 'comprising' and 'including' when used in this description or the appended claims should not be construed in an exclusive or exhaustive sense but rather in an inclusive sense. Thus the expression 'comprising' as used herein does not exclude the presence of other elements or steps in addition to those listed in any claim. Furthermore, the words 'a' and 'an' shall not be construed as limited to 'only one', but instead are used to mean 'at least one', and do not exclude a plurality. Features that are not specifically or explicitly described or claimed may be additionally included in the structure of the invention within its scope. Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. Additions, deletions, and modifications within the purview of the skilled person may generally be made without departing from the scope of the invention, as is determined by the claims.

## Claims

1. Cabin leveling device for a truck or tractor cabin (7) with sleeping accommodation, including:
an actuator (23A; 29) adapted to be operatively associated with suspension means (19, 21, 25, 27, 31) between at least one front wheel (11; 13) of a truck or tractor (1) supported on an earth surface (3) and the cabin (7) of the truck or tractor; and
a control device arranged for selectively operating the actuator (23A; 29) to alter an angular position of the cabin (7) with respect to a horizontal reference level (5), only by increasing or diminishing a distance between the cabin (7) and the at least one front wheel (11; 13) when the truck or tractor (1) is parked, **characterized in that** the actuator (23A; 29) is a hydraulic actuator, and the control device is a cabin tilt pump (51) comprising a 4-position hydraulic valve.

2. Cabin leveling device according to claim 1, wherein the actuator is a linear actuator (23A) for selective extension and retraction, and operating the actuator is effective to increase or diminish a distance between the cabin (7) and the at least one front wheel (11; 13).

3. Cabin leveling device according to claim 1 or 2, wherein the actuator is arranged to be interposed between an axle (17) carrying the at least one front wheel (11; 13) and a chassis frame (15) of a truck or tractor (1).

4. Cabin leveling device according to claim 3, wherein the actuator is arranged to be pivotally connected to a stabilizer rod (21) associated with the axle (17).

5. Cabin leveling device according to claim 3 or 4, wherein the actuator is arranged to be pivotally connected to a longitudinal frame side member (15A; 15B) of a truck or tractor (1).

6. Cabin leveling device according to claim 5, wherein the actuator is arranged to function as a stabilizer shackle (23) when the truck or tractor (1) is being driven.

7. Cabin leveling device according to claim 5 or 6, wherein extension or retraction of the actuator is only enabled when the truck or tractor (1) is not being driven.

8. Cabin leveling device according to one of claims 1 to 7, further including a pair of additional hydraulic lines to connect the cabin tilt pump (51), comprising the 4-position hydraulic valve, with the actuator.

9. Truck or tractor (1) having a cabin (7) with sleeping accommodation and a cabin leveling device according to one of claims 1 to 8.

## Patentansprüche

1. Kabinennivellierungsvorrichtung für eine Lkw- oder Traktorkabine (7) mit Schlafunterbringung, umfassend:
einen Aktuator (23A; 29), geeignet um betriebsfähig mit Aufhängungsmitteln (19, 21, 25, 27, 31) zwischen mindestens einem Vorderrad (11; 13) eines Lkw oder Traktors (1), gestützt auf einer Erdoberfläche (3), und der Kabine (7) des Lkw oder Traktors verbunden zu werden; und
eine Steuervorrichtung, angeordnet zum selektiven Bedienen des Aktuators (23A; 29), um eine Winkelposition der Kabine (7) in Bezug auf ein horizontales Referenzniveau (5) nur durch Erhöhen oder Verringern eines Abstands zwischen der Kabine (7) und dem mindestens einen Vorderrad (11; 13) zu ändern, wenn der Lkw oder Traktor (1) geparkt ist,
**dadurch gekennzeichnet, dass** der Aktuator (23A; 29) ein hydraulischer Aktuator ist und die Steuervorrichtung eine Kabinenneigungspumpe (51) ist, die ein 4-Positionen-Hydraulikventil umfasst.

2. Kabinennivellierungsvorrichtung nach Anspruch 1, wobei der Aktuator ein linearer Aktuator (23A) zum selektiven Ausfahren und Zurückziehen ist, und die Bedienung des Aktuators wirksam ist, um einen Abstand zwischen der Kabine (7) und dem mindestens einen Vorderrad (11; 13) zu erhöhen oder zu verringern.

3. Kabinennivellierungsvorrichtung nach Anspruch 1 oder 2, wobei der Aktuator angeordnet ist, um zwischen einer Achse (17), die das mindestens eine Vorderrad (11; 13) trägt, und einem Fahrgestellrahmen (15) eines Lkw oder Traktors (1) eingefügt zu werden.

4. Kabinennivellierungsvorrichtung nach Anspruch 3, wobei der Aktuator angeordnet ist, um drehend mit einer zu der Achse (17) gehörenden Stabilisatorstange (21) verbunden zu werden.

5. Kabinennivellierungsvorrichtung nach Anspruch 3 oder 4, wobei der Aktuator angeordnet ist, um drehend mit einem Längsrahmen-Seitenelement (15A; 15B) eines Lkw oder Traktors (1) verbunden zu werden.

6. Kabinennivellierungsvorrichtung nach Anspruch 5, wobei der Aktuator angeordnet ist, um als ein Stabilisatorbügel (23) zu funktionieren, wenn der Lkw oder Traktor (1) gefahren wird.

7. Kabinennivellierungsvorrichtung nach Anspruch 5 oder 6, wobei das Ausfahren oder Zurückziehen des Aktuators nur aktiviert ist, wenn der Lkw oder Traktor (1) nicht gefahren wird.

8. Kabinennivellierungsvorrichtung nach einem der Ansprüche 1 bis 7, ferner umfassend ein Paar zusätzliche Hydraulikleitungen, um die Kabinenneigungspumpe (51), die das 4-Positionen-Hydraulikventil umfasst, mit dem Aktuator zu verbinden.

9. Lkw oder Traktor (1) mit einer Kabine (7) mit Schlafunterbringung und einer Kabinennivellierungsvorrichtung nach einem der Ansprüche 1 bis 8.

## Revendications

1. Dispositif de mise à niveau de la cabine d'un camion ou de la cabine d'un tracteur (7) dans laquelle se trouve une couchette, comprenant :
un actionneur (23A ; 29) adapté de façon à être associé de manière opérationnelle à des moyens de suspension (19, 21, 25, 27, 31), situés entre une roue avant (11 ; 13) au moins d'un camion ou d'un tracteur (1) supportés entre la surface du sol terrestre (3) et la cabine (7) du camion ou du tracteur ; et
un dispositif de commande agencé de façon à actionner de manière sélective l'actionneur (23A ; 29) de manière à modifier la position angulaire de la cabine (7) par rapport à un niveau de référence horizontal (5), seulement en augmentant ou en diminuant la distance entre la cabine (7) et la ou les roues avant (11 ; 13) lorsque le camion ou le tracteur (1) est garé, **caractérisé en ce que** l'actionneur (23A ; 29) est un actionneur hydraulique, et le dispositif de commande est une pompe d'inclinaison de cabine (51) qui comprend une soupape hydraulique à 4 positions.

2. Dispositif de mise à niveau d'une cabine selon la revendication 1, dans lequel l'actionneur est un actionneur linéaire (23A) qui permet une extension et une rétraction sélectives, et l'actionnement de l'actionneur est effectif de façon à augmenter ou à diminuer la distance entre la cabine (7) et la ou les roues avant (11 ; 13).

3. Dispositif de mise à niveau d'une cabine selon la revendication 1 ou la revendication 2, dans lequel l'actionneur est agencé de façon à être interposé entre un essieu (17) qui porte la ou les roues avant (11 ; 13) et le cadre de châssis (15) d'un camion ou d'un tracteur (1).

4. Dispositif de mise à niveau d'une cabine selon la revendication 3, dans lequel l'actionneur est agencé de façon à être connecté de manière pivotante à une tige d'un stabilisateur (21) associé à l'essieu (17).

5. Dispositif de mise à niveau d'une cabine selon la revendication 3 ou la revendication 4, dans lequel l'actionneur est agencé de façon à être connecté de manière pivotante à un élément latéral du cadre longitudinal (15A; 15B) d'un camion ou d'un tracteur (1).

6. Dispositif de mise à niveau d'une cabine selon la revendication 5, dans lequel l'actionneur est agencé de façon à fonctionner comme une manille de stabilisateur (23) lorsque le camion ou le tracteur (1) roule.

7. Dispositif de mise à niveau d'une cabine selon la revendication 5 ou la revendication 6, dans lequel l'extension ou la rétraction de l'actionneur ne peut se faire que lorsque le camion ou le tracteur (1) ne roule pas.

8. Dispositif de mise à niveau d'une cabine selon l'une quelconque des revendications 1 à 7, comprenant en outre une paire de conduites hydrauliques supplémentaires destinées à connecter la pompe d'inclinaison de la cabine (51), qui comprend la soupape hydraulique à 4 positions, et l'actionneur.

9. Camion ou tracteur (1) qui présente une cabine (7) avec une couchette et un dispositif de mise à niveau d'une cabine selon l'une quelconque des revendications 1 à 8.
